# EUROPEAN PATENT SPECIFICATION

(11) **EP 1 845 121 B1**
(45) Date of publication and mention of the grant of the patent: **15.07.2009**
(21) Application number: 07006484.5
(22) Date of filing: 29.03.2007
(51) Int. Cl.: C08G 18/28, C08G 18/36, C08G 18/66

(54) **Storage stable isocyanate-reactive component containing vegetable oil-based polyol**
Lagerstabile, auf Pflanzenöl basierendes Polyol enthaltende isocyanat-reaktive Komponente
Stockage de composant réactif à l'isocyanate stable comportant un polyol à base d'huile végétale

(30) Priority: 11.04.2006 US 401510
(43) Date of publication of application: 17.10.2007
(73) Proprietor: Bayer MaterialScience LLC, Pittsburgh, PA 15205 (US)
(72) Inventor: Neal, Brian L., Scott Depot, WV 25560 (US); Moore, Micah N., Red House, WV 25168 (US); Hager, Stanley Lee, Cross Lanes, WV 25313 (US); Carter, Randall A., Spring Hill, WV 25309 (US)
(74) Representative: Klimiuk, Meike

(56) References cited:
- EP-A1- 0 953 585
- WO-A-00/46266
- WO-A-98/42764

## Description

### FIELD OF THE INVENTION

The present invention relates in general to storage stable compositions useful in the preparation of polyurethane foams and elastomers, and more specifically, to a storage stable isocyanate-reactive component which contains a vegetable oil-based polyol.

### BACKGROUND OF THE INVENTION

Polyurethane foams and elastomers have found extensive use in a multitude of industrial and consumer applications. This popularity is due to the wide ranging mechanical properties of polyurethane and to its relative ease of manufacture. Automobiles, for example, contain numerous polyurethane components, such as seats, headrests, dashboards and other cabin interior parts. Polyurethane foams have traditionally been categorized as being flexible, semi-rigid, or rigid; with flexible foams generally being softer, less dense, more pliable and more subject to structural rebound subsequent loading than are rigid foams.

The production of polyurethane foams is well known to those skilled in the art. Polyurethanes are formed from the reaction of NCO groups with hydroxyl groups. The most common method of polyurethane production is via the reaction of a polyol and an isocyanate which forms the backbone urethane group. Cross linking agents, blowing agents, catalysts and other additives may also be included in the polyurethane formulation as needed. As is commonly understood by those in the art, polymers included in the polyurethane classification may also include the reaction products from other isocyanate-reactive species that become part of the polymer backbone. Urea groups formed from the reaction of amines with the isocyanates are the most common example and are particularly prevalent in water-blown urethane foams.

A widely used process in the production of polyurethane foams and elastomers is to mix together most or all of the isocyanate-reactive reactants and formulation additives and store this isocyanate-reactive component until such time that it is convenient to mix with the isocyanate to produce the foam or elastomer product. It can be particularly advantageous to have the isocyanate reactive component carefully prepared at a location that is well-equipped to accurately weigh and blend the component by those highly skilled in the blending process.

Polyols, which are normally the major constituent by weight used in the production of polyurethanes, are typically petrochemical in origin, being generally derived from propylene oxide, ethylene oxide and various starters such as ethylene glycol, propylene glycol, glycerin, sucrose and sorbitol. Polyester polyols and polyether polyols are the most common polyols used in polyurethane production. For semi-rigid foams, polyester or polyether polyols with molecular weights of from about 300 to 2,000 are generally used, whereas for flexible foams longer chain polyols with molecular weights of from about 1,000 to 10,000 are typically used. Polyester and polyether polyols can be selected to allow the engineering of a particular polyurethane elastomer or foam having desired final toughness, durability, density, flexibility, compression set ratios and modulus and hardness qualities. Generally, higher molecular weight polyols and lower functionality polyols tend to produce more flexible foams than do lower molecular weight polyols and higher functionality polyols.

However, petroleum-derived components such as polyester and polyether polyols pose several disadvantages. The use of such polyester or polyether polyols contributes to the depletion of oil, which is a non-renewable resource. Also, the production of such a polyol requires the consumption of a great deal of energy because the oil needed to make the polyol must be drilled, extracted and transported to a refinery where it is refined and processed into the finished polyol.

As the consuming public becomes progressively more aware of the environmental impact of this production chain, consumer demand for "greener" products will continue to grow. An increasing number of companies have announced goals of having a certain percentage of their products based on renewable resources. Preferences for products based on renewable resources have also begun to appear in some government regulations. These factors combined with the ever rising costs of petroleum-based products have further spurred efforts to develop polyurethane foam and elastomer products based on various oils derived from plants. To help reduce the depletion of oil whilst satisfying this increasing consumer demand, it would be advantageous to partially or wholly replace the petroleum-derived polyester or polyether polyols used in the production of polyurethane foams and elastomers with more versatile, renewable and more environmentally responsible components.

Attempts have been made by workers in the art to accomplish this goal. Plastics and foams made using fatty acid triglycerides derived from vegetables, including soybean derivatives, have been developed. As a renewable, versatile, and environmentally-friendly resource, soybeans have been, and will continue to be, desirable as ingredients for plastics manufacture.

However, a major drawback to this approach is that, when mixed with other polyurethane formulation ingredients, vegetable oil-derived polyols have a tendency to form an incompatible layer that is resistant to dispersion by mechanical means. Heretofore, this instability has hindered the utilization of vegetable oil-based formulations on a day-to-day basis in production and in the shipment/storage of fully blended resin components. It should be noted that during normal shipping, storage and use for polyurethane foam and elastomer production, these blended components may be subjected to temperatures as low as -10°C and as high as 60°C.

Therefore, a need exists in the art for a storage stable, vegetable oil-based polyol containing isocyanate-reactive component which can be shipped and stored for several days, more preferably at least one week and most preferably for up to one month or more at normal shipping and storage temperatures and still produce acceptable foam on a daily basis, thus helping to satisfy polyurethane foam and elastomer producers' needs for "greener" materials.

### SUMMARY OF THE INVENTION

Accordingly, the present invention provides such an isocyanate-reactive component containing at least 10 wt.%, based on the weight of the isocyanate-reactive component, of a vegetable oil-based polyol, a nonionic emulsifier containing one of an aliphatic alcohol ethoxylate and an aliphatic phenol ethoxylate having a polymerized ethylene oxide content of at least 25 moles per equivalent of alcohol or phenol and a HLB value greater than 17, one or more non-vegetable oil-based polyols, one or more silicone surfactants, and optionally, water or other blowing agents, catalysts, pigments and fillers, wherein the isocyanate-reactive component is storage stable at temperatures of from -10°C to 60°C for at least three days.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides an isocyanate-reactive component containing at least 10 wt.%, based on the weight of the isocyanate-reactive component, of a vegetable oil-based polyol, a nonionic emulsifier containing one of an aliphatic alcohol ethoxylate and an aliphatic phenol ethoxylate having a polymerized ethylene oxide content of at least 25 moles per equivalent of alcohol or phenol and a HLB value greater than 17, one or more non-vegetable oil-based polyols, one or more silicone surfactants, and optionally, water or other blowing agents, catalysts, pigments and fillers, wherein the isocyanate-reactive component is storage stable at temperatures of from -10°C to 60°C for at least three days.

The present invention further provides a process for producing an isocyanate-reactive component involving combining at least 10 wt.%, based on the weight of the isocyanate-reactive component, of a vegetable oil-based polyol, a nonionic emulsifier containing one of an aliphatic alcohol ethoxylate and an aliphatic phenol ethoxylate having a polymerized ethylene oxide content of at least 25 moles per equivalent of alcohol or phenol and a HLB value greater than 17, one or more non-vegetable oil-based polyols, one or more silicone surfactants, and optionally, water or other blowing agents, catalysts, pigments and fillers, wherein the isocyanate-reactive component is storage stable at temperatures of from -10°C to 60°C for at least three days.

The present invention still further provides a polyurethane foam or elastomer which is the reaction product of at least one polyisocyanate and an isocyanate-reactive component containing at least 10 wt.%, based on the weight of the isocyanate-reactive component, of a vegetable oil-based polyol, a nonionic emulsifier containing one of an aliphatic alcohol ethoxylate and an aliphatic phenol ethoxylate having a polymerized ethylene oxide content of at least 25 moles per equivalent of alcohol or phenol and a HLB value greater than 17, one or more non-vegetable oil-based polyols, one or more silicone surfactants, and optionally, water or other blowing agents, catalysts, pigments and fillers, wherein the isocyanate-reactive component is storage stable at temperatures of from -10°C to 60°C for at least three days.

In the present invention, a vegetable oil-based polyol partially replaces the petroleum-derived polyul(s) that would typically be found in an isocyanate-reactive component employed in the production of a polyurethane foam or elastomer, thereby helping to satisfy polyurethane elastomer and foam producers' needs for a "green" component. The vegetable oil-based polyol may be included in amounts of at least 10 wt.%, preferably at least 30 wt.% and more preferably from 30 wt.% to 40 wt.% and even in amounts greater than 40 wt.%, wherein the weight percentages are based on the weight of the isocyanate-reactive component. The vegetable oil-based polyol may be present in the isocyanate-reactive component of the present invention in an amount ranging between any combination of these values, inclusive of the recited values.

The preferred vegetable oil-based polyol in the inventive isocyanate-reactive component is soybean oil, although the inventors herein contemplate that virtually any other vegetable oil-based polyol, such those based on sunflower, canola, linseed, cottonseed, tung, palm, poppy seed, com, castor and peanut oil may prove useful in the present invention.

Although the inventive isocyanate-reactive component contains from at least 10 wt.% to 40 wt.% or more of a vegetable oil-based polyol, it is storage stable. As used herein, the term "storage stable" means that the isocyanate-reactive component will exhibit little or no separation, for at least three days, more preferably for at least seven days and most preferably for at least 30 days, with any minor separation capable of being re-dispersed with minimal agitation. "Instability" as used herein refers to a condition where, upon separation, the blend cannot be readily homogenized via agitation. Some formulations of the inventive isocyanate-reactive component have remained storage stable (very few oil droplets on surface) for as long as four months. The inventive isocyanate-reactive component is storage stable at "normal shipping and use temperatures" which may vary from as low as -10°C to as high as 60°C, more preferably from 10°C to 40°C, and most preferably from 15°C to 35°C.

The nonionic emulsifier included in the isocyanate-reactive component of the present invention is an aliphatic alcohol ethoxylate or an aliphatic phenol ethoxylate having a polymerized ethylene oxide content of at least 25 moles per equivalent of alcohol or phenol, more preferably at least 30 moles per equivalent and most preferably at least 35 moles per equivalent. The aliphatic alcohol or aliphatic phenol of the present invention has an average equivalent weight of from 90 to 300, more preferably from 140 to 250, and most preferably from 180 to 230. The ethylene oxide content and equivalent weight of the emulsifier included in the inventive isocyanate-reactive component may each be in an amount ranging between any combination of these respective values, inclusive of the recited values. The nonionic emulsifier may preferably be included in the isocyanate-reactive component of the present invention in an amount of at least 3 wt.%, based on the weight of the isocyanate-reactive component.

The term "HLB" as used herein means the balance between the oil-soluble and water-soluble moieties in a surface active molecule, and is expressed as the "Hydrophile-Liphophile Balance". A more oil-soluble emulsifier shows a lower HLB and a more water-soluble emulsifier shows the reverse. More information about the HLB system can be found in Kirk-Othmer Encyclopedia of Chemical Technology, 3rd Edition, Vol. 8 (1979), page 900. The nonionic emulsifier included in the isocyanate-reactive component of the present invention has a HLB of at least 17, more preferably at least 17.5, and most preferably at least 18. The emulsifier included in the isocyanate-reactive component of the present invention may have a HLB in an amount ranging between any combination of these values, inclusive of the recited values.

The inventive isocyanate-reactive component also includes one or more non-vegetable oil-based (i.e., petrochemically derived) polyols such as polyethers, polyesters, polyacetals, polycarbonates, polyesterethers, polyester carbonates, polythioethers, polyamides, polyesteramides, polysiloxanes, polybutadienes and polyacetones. This non-vegetable oil-based polyol may be made by basic catalysis or by double metal cyanide (DMC) catalysis as is known in the art. Polyether and polyester polyols are particularly preferred in the isocyanate-reactive component of the present invention.

As known to those skilled in the art, polyurethane foams and elastomers are formed by the reaction of a polyisocyanate with an isocyanate-reactive component, such as those provided by the instant invention. Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula,

Q(NCO)ₙ

in which n is a number from 2-5, preferably 2-3, and Q is an aliphatic hydrocarbon group containing 2-18, preferably 6-10, carbon atoms; a cycloaliphatic hydrocarbon group containing 4-15, preferably 5-10, carbon atoms; an araliphatic hydrocarbon group containing 8-15, preferably 8-13, carbon atoms; or an aromatic hydrocarbon group containing 6-15, preferably 6-13, carbon atoms.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate, and mixtures of these isomers; 1-isocyanato-3,3,5-trimethyl-5-isocyanatomethylcyclohexane (isophorone diisocyanate; e.g. German Auslegeschrift 1,202,785 and U.S. Pat. No. 3,401,190); 2,4- and 2,6-hexahydrotoluene diisocyanate and mixtures of these isomers; dicyclohexylmethane-4,4'-diisocyanate (hydrogenated MDI, or HMDI); 1,3- and 1,4-phenylene diisocyanate; 2,4- and 2,6-toluene diisocyanate and mixtures of these isomers (TDI); diphenylmethane-2,4'- and/or -4,4'-diisocyanate (MDI); naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbornane diisocyanates, such as described in U.S. Pat. No. 3,492,330; m- and p-isocyanatophenyl sulfonylisocyanates of the type described in U.S. Pat. No. 3,454,606; perchlorinated aryl polyisocyanates of the type described, for example, in U.S. Pat. No. 3,227,138; modified polyisocyanates containing carbodiimide groups of the type described in U.S. Pat. No. 3,152,162; modified polyisocyanates containing urethane groups of the type described, for example, in U.S. Pat. Nos. 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Pat. No. 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Pat. Nos. 3,124,605 and 3,201,372, and in GB 889,050; polyisocyanates obtained by telomerization reactions of the type described, for example, in U.S. Pat. No. 3,654,106; polyisocyanates containing ester groups of the type described, for example, in GB 965,474 and GB 1,072,956, in U.S. Pat. No. 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Pat. No. 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above.

In general, it is preferred to use readily available polyisocyanates, such as 2,4- and 2,6-toluene diisocyanates and mixtures of these isomers (TDI); polyphenyl-polymethylene-polyisocyanates of the type obtained by condensing aniline with formaldehyde, followed by phosgenation (crude MDI); and polyisocyanates containing carbodiimide groups, urethane groups, allophanate groups, isocyanurate groups, urea groups, or biuret groups (modified polyisocyanates).

Isocyanate-terminated prepolymers may also be employed in the preparation of polyurethane foams and elastomers with the inventive isocyanate-reactive component. Prepolymers may be prepared by reacting an excess of organic polyisocyanate or mixtures thereof with a minor amount of an active hydrogen-containing compound as determined by the well-known Zerewitinoff test, as described by Kohler in "Journal of the American Chemical Society," 49, 3181 (1927). These compounds and their methods of preparation are well known to those skilled in the art. The use of any one specific active hydrogen compound is not critical; any such compound can be employed when producing polyurethane foams and elastomers with the isocyanate-reactive component of the present invention.

Foam stabilizers which may be considered suitable for use in the inventive isocyanate-reactive component include, for example, polyether siloxanes, and preferably those exhibiting low water solubility. Compounds such as these are generally of such a structure that copolymers of ethylene oxide and propylene oxide are attached to a polydimethylsiloxane residue. Such foam stabilizers are described in, for example, U.S. Pat. Nos. 2,834,748, 2,917,480 and 3,629,308. The preferred silicone stabilizers are those that find use in froth foam production such as NIAX Silicones L-5614, L-626 and L-6164 from General Electric. Such silicone surfactants may be included in the inventive isocyanate-reactive component of the present invention in amounts of at least 0.3 wt.%, based on the weight of the isocyanate-reactive component.

Other suitable additives which may optionally be included in the isocyanate-reactive component of the present invention include, for example, catalysts, cell regulators, reaction inhibitors, flame retardants, plasticizers, pigments, fillers, etc.

Catalysts suitable for inclusion in the inventive isocyanate-reactive component include those which are known in the art. These catalysts include, for example, tertiary amines, such as triethylamine, tributylamine, N-methylmorpholine, N-ethylmorpholine, N,N,N',N'-tetramethylethylenediamine, pentamethyl-diethylenetriamine and higher homologues (as described in, for example, DE-A 2,624,527 and 2,624,528), 1,4-diazabicyclo(2.2.2)octane, N-methyl-N'-dimethyl-aminoethylpiperazine, bis-(dimethylaminoalkyl)piperazines, N,N-dimethylbenzylamine, N,N-dimethylcyclohexylamine, N,N-diethyl-benzylamine, bis-(N,N-diethylaminoethyl) adipate, N,N,N',N'-tetramethyl-1,3-butanediamine, N,N-dimethyl-β-phenylethylamine, 1,2-dimethylimidazole, 2-methylimidazole, monocyclic and bicyclic amines together with bis-(dialkylamino)alkyl ethers, such as 2,2-bis-(dimethylaminoethyl) ether.

Other suitable catalysts which may be used in producing polyurethane foams and elastomers with the isocyanate-reactive component of the present invention include, for example, organometallic compounds, and particularly, organotin compounds. Organotin compounds which may be considered suitable include those organotin compounds containing sulfur. Such catalysts include, for example, di-n-octyltin mercaptide. Other types of suitable organotin catalysts include, preferably tin(II) salts of carboxylic acids such as, for example, tin(II) acetate, tin(II) octoate, tin(II) ethylhexoate and/or tin(II) laurate, and tin(IV) compounds such as, for example, dibutyltin oxide, dibutyltin dichloride, dibutyltin diacetate, dibutyltin dilaurate, dibutyltin maleate and/or dioctyltin diacetate.

Further examples of suitable additives, which may optionally be included in making flexible polyurethane foams with the isocyanate-reactive component of the present invention can be found in Kunststoff-Handbuch, vol. VII, edited by Vieweg & Hochtlen, Carl Hanser Verlag, Munich 1993, 3rd Ed., pp. 104 to 127, for example. The relevant details concerning the use and mode of action of these additives are set forth therein.

### EXAMPLES

The present invention is further illustrated, but is not to be limited, by the following examples. All quantities given in "parts" and "percents" are understood to be by weight, unless otherwise indicated. Isocyanate-reactive components were made by combining the following in the indicated amounts as summarized in the tables below.
- POLYOL A: a propylene oxide/ethylene oxide polyether polyol, (80 wt.% PO / 20 wt.% EO end block), having a hydroxyl number of about 28 mg KOH/g;
- POLYOL B: a soybean oil-based polyol having a hydroxyl number of about 54 mg KOH/g available from Urethane Soy Systems Co. as SOYOL R2-052-B;
- POLYOL C: a 43 wt.% solids polymer polyol having a hydroxyl number of about 20.2, in which the solids are a (30.9%) styrene (64.3%) acrylonitrile (4.8%) polyvinylidene chloride mixture polymerized *in situ* in a base polyol having a hydroxyl number of about 36 mg KOH/g prepared by KOH-catalyzed alkoxylation of a glycerin based polyether having 20% EO in the cap;
- POLYOL D: a polyether polyol having a hydroxyl number of about 37.0, prepared by KOH-catalyzed alkoxylation of glycerin with a block of propylene oxide (4.9 wt.% of the total oxide), followed by a mixed block of ethylene oxide (62.7 wt.% of the total oxide) and propylene oxide (22.4 wt.% of the total oxide), finished with a block of ethylene oxide (10 wt.% of the total oxide);
- CATALYST A: a gelling triethylenediamine-based catalyst available from GE Silicones as NIAX A-33;
- CATALYST B: an amine catalyst available as NIAX A-1 from GE Silicones;
- SURFACTANT A: an polyether silicone surfactant available from General Electric as NIAX L-626;
- SURFACTANT B: a non-hydrolyzable polyether silicone surfactant available from General Electric as NIAX L-6164;
- EMULSIFIER A: a surfactant available from Air Products as DABCO LK-221;
- EMULSIFIER B: a hydrocarbon surfactant available from General Electric as NIAX L-6884;
- EMULSIFIER C: a castor seed oil ethoxylate (40-moles of EO) having a HLB of 13.3, available from CasChem Inc. as SURFACTOL 365;
- EMULSIFIER D: an ethoxylated nonylphenol (4 moles of EO) having a HLB of 8.9, available from Dow Chemical as TERGITOL NP-4;
- EMULSIFIER E: an ethoxylated nonylphenol (10 moles of EO) having a HLB of 13.6, available from Dow Chemical as TERGITOL NP-10;
- EMULSIFIER F: an ethoxylated nonylphenol (40 moles of EO) having a HLB of 17.8, available from Dow Chemical as TERGITOL NP-40 (70% active);
- EMULSIFIER G: an ethoxylated trimethylnonanol (3 moles of EO) having a HLB of 8.1, available from Dow Chemical as TERGITOL TMN-3;
- EMULSIFIER H: an ethoxylated trimethylnonanol (10 moles of EO) having a HLB of 16.1, available from Dow Chemical as TERGITOL TMN-10 (90% active);
- EMULSIFIER I: a C₁₁-C₁₅ secondary alcohol ethoxylate (3 moles of EO) having a HLB of 8.3, available from Dow Chemical as TERGITOL 15-S-3;
- EMULSIFIER J: a C₁₁-C₁₅ secondary alcohol ethoxylate (9 moles of EO) having a HLB of 13.3, available from Dow Chemical as TERGITOL 15-S-9;
- EMULSIFIER K: an ethylene oxide/propylene oxide copolymer available from Dow Chemical as TERGITOL XH;
- EMULSIFIER L: a castor seed oil ethoxylate (5-moles of EO) having a HLB of 3.6, available from CasChem Inc. as SURFACTOL 318; and
- EMULSIFIER M: a C₁₁-C₁₅ secondary alcohol ethoxylate (41 moles of EO) having a HLB of 18, available from Dow Chemical as TERGITOL 15-S-40 (70% active).

The following emulsifiers were tested for efficacy but underwent full phase separation within 2-3 days storage (data not presented) and were not further evaluated.
- EMULSIFIER N: a castor oil ethoxylate (30 moles of EO) available from Huntsman as SURFONIC CO-30;
- EMULSIFIER O: a sorbitan trioleate (polysorbate 85) having a HLB of 11 and available from Aldrich as TWEEN 85;
- EMULSIFIER P: a blocked copolymer of propylene oxide and ethylene oxide having a HLB of 30, available from BASF as PLURONIC F38 (70% active);
- EMULSIFIER Q: a blocked copolymer of propylene oxide and ethylene oxide having a HLB of 14, available from BASF as PLURONIC L10;
- EMULSIFIER R: a blocked copolymer of propylene oxide and ethylene oxide having a HLB of 19, available from BASF as PLURONIC L35;
- EMULSIFIER S: a C₁₁-C₁₅ secondary alcohol ethoxylate (20 moles of EO) having a HLB of 16.3, available from Dow Chemical as TERGITOL 15-S-20;
- EMULSIFIER T: a polyoxyethylene (20) monolaurate having a HLB of 16.7 and available from Aldrich as TWEEN 20; and
- EMULSIFIER U: an ethoxylated nonylphenol (15 moles of EO) having a HLB of 15, available from Huntsman as SURFONIC N150.

The following emulsifier was tested for efficacy but underwent full phase separation within 24 hours (data not presented) and was not further evaluated.
- EMULSIFIER V: an ethylene oxide/propylene oxide copolymer available from Dow Chemical as TERGITOL XD.

Table I below summarizes the results of storage stability determinations of Emulsifiers A-M in an isocyanate-reactive component containing a vegetable oil-based polyol.

For each emulsifier, a total of 300 g of isocyanate-reactive component was mixed for ten minutes in a one quart cup, poured into an eight-ounce glass jar and stored at room temperature (18-24°C) for one month. The glass jars were sealed during storage. Qualitative observations were made at the times indicated in the tables below.

Examples C-1 and C-16 contained the same materials in the same amounts, however, Example C-16 was heated to 30°C during the mixing process. In Examples 8, 10 and 15, the amount of emulsifier added was that required to provide 5 php of active material to allow direct comparison with the other emulsifiers.

As can be appreciated by reference to Table I below, Emulsifier F (an ethoxylated nonylphenol (40 moles of EO) having a HLB of 17.8) and Emulsifier M (a C₁₁-C₁₅ secondary alcohol ethoxylate (41 moles of EO) having a HLB of 18) gave the most promising results.

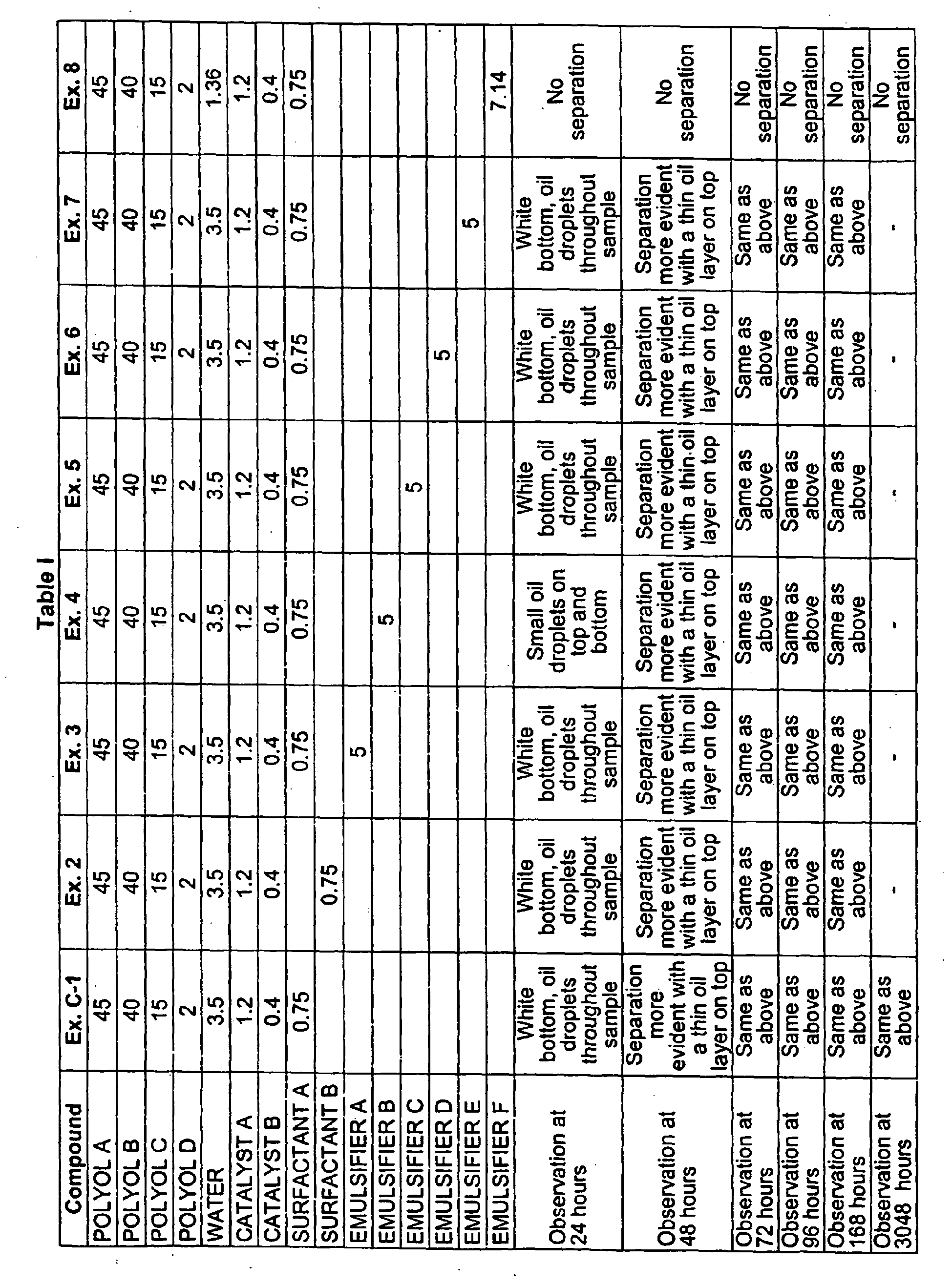

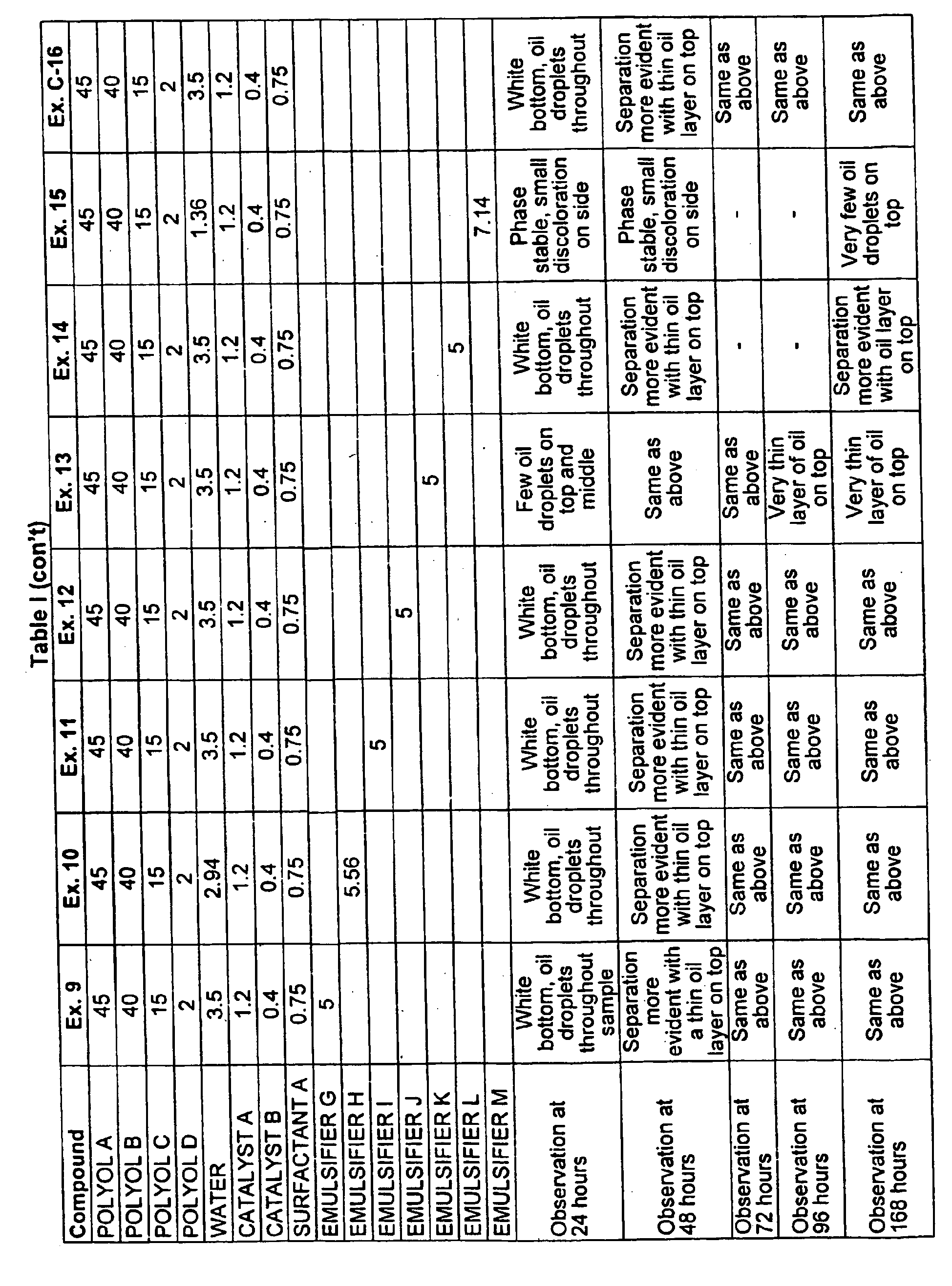

**Table II**

| **Compound** | **Ex. C-17** | **Ex. 18** | **Ex. 19** | **Ex. 20** | **Ex. 21** | **Ex. 22** | **Ex. 23** | **Ex. 24** |
|---|---|---|---|---|---|---|---|---|
| POLYOL A | 45 | 45 | 45 | 45 | 75 | 75 | 55 | 55 |
| POLYOL B | 40 | 40 | 40 | 40 | 10 | 10 | 30 | 30 |
| POLYOL C | 15 | 15 | 15 | 15 | 15 | 15 | 15 | 15 |
| POLYOL D | 2 | 2 | 2 | 2 | 2 | 2 | 2 | 2 |
| WATER | 3.5 | 1.36 | 2.21 | 3.07 | 3.5 | 1.36 | 3.5 | 1.36 |
| CATALYST A | 1.2 | 1.2 | 1.2 | 1.2 | 1.2 | 1.2 | 1.2 | 1.2 |
| CATALYST B | 0.4 | 0.4 | 0.4 | 0.4 | 0.4 | 0.4 | 0.4 | 0.4 |
| SURFACTANT A | 0.75 | 0.75 | 0.75 | 0.75 | 0.75 | 0.75 | 0.75 | 0.75 |
| EMULSIFIER F | | 7.14 (5.0 Active) | 4.29 (3.0 Active) | 1.43 (1.0 Active) | | 7.14 (5.0 Active) | | 7.14 (5.0 Active) |
| Observation at 24 hours | While bottom, oil droplets throughout sample | Phase stable | Slight separation very few droplet on top and bottom | Slightly better than control (C-19) | Phase stable | Phase stable | Oil droplets on top, better than control | Phase stable |
| Observation at 48 hours | Separation more evident with thin oil layer on top | Phase stable | Separation more evident with thin oil layer on top | Separation more evident with thin oil layer on top | Phase stable | Phase stable | Separation more evident with thin oil layer on top | Phase stable |
| Observation at 168 hours | Separation increased | Very few oil droplet on top | Separation more evident with thin oil layer on top | Separation more evident with thin oil layer on top | Very few oil droplet on top | Very few oil droplet on top | Separation more evident with thin oil layer on top | Very few oil droplet on top |

Emulsifier F was further examined for its effects upon storage stability. The results of those assessments are presented in Table II above. As can be appreciated by reference to Table II, Emulsifier F provided good stabilization of the isocyanate-reactive component containing as much as 40 php of Polyol B when that emulsifier was used at the 7.1 php level (5 php active). Some stabilization was also observed at lower usage levels of Emulsifier F down to 1.4 php (1 php active).

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. An isocyanate-reactive component comprising:
at least about 10 wt.%, based on the weight of the isocyanate-reactive component, of a vegetable oil-based polyol;
a nonionic emulsifier comprising one of an aliphatic alcohol ethoxylate and an aliphatic phenol ethoxylate having a polymerized ethylene oxide content of at least about 25 moles per equivalent of alcohol or phenol and a HLB value greater than about 17;
one or more non-vegetable oil-based polyols;
one or more silicone surfactants, and
optionally, water or other blowing agents, catalysts, pigments and fillers,
wherein the isocyanate-reactive component is storage stable at temperatures of from about -10°C to about 60°C for at least about three days.

2. The isocyanate-reactive component according to Claim 1, wherein the vegetable oil is chosen from sunflower oil, canola oil, linseed oil, cottonseed oil, tung oil, palm oil, poppy seed oil, corn oil, castor oil, peanut oil and soybean oil.

3. The isocyanate-reactive component according to Claim 1, wherein the vegetable oil is soybean oil.

4. The isocyanate-reactive component according to Claim 1 comprising from about 30 wt.% to about 40 wt.%, based on the weight of the isocyanate-reactive component, of the vegetable oil-based polyol.

5. The isocyanate-reactive component according to Claim 1 comprising at least about 40 wt.%, based on the weight of the isocyanate-reactive component, of the vegetable oil-based polyol.

6. The isocyanate-reactive component according to Claim 1, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

7. The isocyanate-reactive component according to Claim 1, wherein the non-vegetable oil-based polyol is a polyether polyol.

8. The isocyanate-reactive component according to Claim 1, wherein the non-vegetable oil-based polyol is a polyester polyol.

9. The isocyanate-reactive component according to Claim 1, wherein the nonionic emulsifier has a polymerized ethylene oxide content of at least about 30 moles per equivalent of alcohol or phenol and a HLB value greater than about 17.5.

10. The isocyanate-reactive component according to Claim 1, wherein the nonionic emulsifier has a polymerized ethylene oxide content of at least about 35 moles per equivalent of alcohol or phenol and a HLB value greater than about 18 and the equivalent weight of the alcohol or phenol is between about 140 and about 250.

11. The isocyanate-reactive component according to Claim 1 comprising at least about 3 wt.%, based on the weight of the isocyanate-reactive component, of the nonionic emulsifier.

12. The isocyanate-reactive component according to Claim 1 comprising at least about 0.3 wt.%, based on the weight of the isocyanate-reactive component, of the one or more silicone surfactants.

13. The isocyanate-reactive component according to Claim 1 having storage stability of at least about seven days.

14. The isocyanate-reactive component according to Claim 1 having storage stability of at least about 30 days.

15. The isocyanate-reactive component according to Claim 1, wherein the isocyanate-reactive component is storage stable at temperatures of from about 10°C to about 40°C for at least about three days.

16. The isocyanate-reactive component according to Claim 1, wherein the isocyanate-reactive component is storage stable at temperatures of from about 15°C to about 35°C for at least about three days.

17. A process for producing an isocyanate-reactive component comprising combining:
at least about 10 wt.%, based on the weight of the isocyanate-reactive component, of a vegetable oil-based polyol;
a nonionic emulsifier comprising one of an aliphatic alcohol ethoxylate and an aliphatic phenol ethoxylate having a polymerized ethylene oxide content of at least about 25 moles per equivalent of alcohol or phenol and a HLB value greater than about 17;
one or more non-vegetable oil-based polyols;
one or more silicone surfactants, and
optionally, water or other blowing agents, catalysts, pigments and fillers,
wherein the isocyanate-reactive component is storage stable at temperatures of from about -10°C to about 60°C for at least about three days.

18. The process according to Claim 17, wherein the vegetable oil is chosen from sunflower oil, canola oil, linseed oil, cottonseed oil, tung oil, palm oil, poppy seed oil, corn oil, castor oil, peanut oil and soybean oil.

19. The process according to Claim 17, wherein the vegetable oil is soybean oil.

20. The process according to Claim 17, wherein the isocyanate-reactive component comprises from at least about 30 wt.% to about 40 wt.%, based on the weight of the isocyanate-reactive component, of the vegetable oil-based polyol.

21. The process according to Claim 17, wherein the isocyanate-reactive component comprises at least about 40 wt.%, based on the weight of the isocyanate-reactive component, of the vegetable oil-based polyol.

22. The process according to Claim 17, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

23. The process according to Claim 17, wherein the non-vegetable oil-based polyol is a polyether polyol.

24. The process according to Claim 17, wherein the non-vegetable oil-based polyol is a polyester polyol.

25. The process according to Claim 17, wherein the nonionic emulsifier has a polymerized ethylene oxide content of at least about 30 moles per equivalent of alcohol or phenol and a HLB value greater than about 17.5.

26. The process according to Claim 17, wherein the nonionic emulsifier has a polymerized ethylene oxide content of at least about 35 moles per equivalent of alcohol or phenol and a HLB value greater than about 18 and the equivalent weight of the alcohol or phenol is between about 140 and about 250.

27. The process according to Claim 17, wherein the isocyanate-reactive component comprises at least about 3 wt.%, based on the weight of the isocyanate-reactive component, of the nonionic emulsifier.

28. The process according to Claim 17, wherein the isocyanate-reactive component comprises at least about 0.3 wt.%, based on the weight of the isocyanate-reactive component, of the one or more silicone surfactants.

29. The process according to Claim 17, wherein the isocyanate-reactive component has storage stability of at least about seven days.

30. The process according to Claim 17, wherein the isocyanate-reactive component has storage stability of at least about 30 days.

31. The process according to Claim 17, wherein the isocyanate-reactive component has storage stability at temperatures of from about 10°C to about 40°C for at least about three days.

32. The process according to Claim 17, wherein the isocyanate-reactive component has storage stability at temperatures of from about 15°C to about 35°C for at least about three days.

33. A polyurethane foam or elastomer comprising the reaction product of:
at least one polyisocyanate; and
an isocyanate-reactive component comprising,
at least about 10 wt.%, based on the weight of the isocyanate-reactive component, of a vegetable oil-based polyol;
a nonionic emulsifier comprising one of an aliphatic alcohol ethoxylate and an aliphatic phenol ethoxylate having a polymerized ethylene oxide content of at least about 25 moles per equivalent of alcohol or phenol and a HLB value greater than about 17;
one or more non-vegetable oil-based polyols;
one or more silicone surfactants, and
optionally, water or other blowing agents, catalysts, pigments and fillers,
wherein the isocyanate-reactive component is storage stable at temperatures of from about -10°C to about 60°C for at least about three days.

34. The polyurethane foam or elastomer according to Claim 33, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), naphthylene-1,5-diisocyanate, triphenyl-methane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret-containing polyisocyanates, isocyanate-terminated prepolymers and mixtures thereof.

35. The polyurethane foam or elastomer according to Claim 33, wherein the vegetable oil is chosen from sunflower oil, canola oil, linseed oil, cottonseed oil, tung oil, palm oil, poppy seed oil, corn oil, castor oil, peanut oil and soybean oil.

36. The polyurethane foam or elastomer according to Claim 33, wherein the vegetable oil is soybean oil.

37. The polyurethane foam or elastomer according to Claim 33, wherein the isocyanate-reactive component comprises from at least about 30 wt.% to about 40 wt.%, based on the weight of the isocyanate-reactive component, of the vegetable oil-based polyol.

38. The polyurethane foam or elastomer according to Claim 33, wherein the isocyanate-reactive component comprises at least about 40 wt.%, based on the weight of the isocyanate-reactive component, of the vegetable oil-based polyol.

39. The polyurethane foam or elastomer according to Claim 33, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

40. The polyurethane foam or elastomer according to Claim 33, wherein the non-vegetable oil-based polyol is a polyether polyol.

41. The polyurethane foam or elastomer according to Claim 33, wherein the non-vegetable oil-based polyol is a polyester polyol.

42. The polyurethane foam or elastomer according to Claim 33, wherein the nonionic emulsifier has a polymerized ethylene oxide content of at least about 30 moles per equivalent of alcohol or phenol and a HLB value greater than about 17.5.

43. The polyurethane foam or elastomer according to Claim 33, wherein the nonionic emulsifier has a polymerized ethylene oxide content of at least about 35 moles per equivalent of alcohol or phenol and a HLB value greater than about 18 and the equivalent weight of the alcohol or phenol is between about 140 and about 250.

44. The polyurethane foam or elastomer according to Claim 33, wherein the isocyanate-reactive component comprises at least about 3 wt.%, based on the weight of the isocyanate-reactive component, of the nonionic emulsifier.

45. The polyurethane foam or elastomer according to Claim 33, wherein the isocyanate-reactive component comprises at least about 0.3 wt.%, based on the weight of the isocyanate-reactive component, of the one or more silicone surfactants.

46. The polyurethane foam or elastomer according to Claim 33, wherein the isocyanate-reactive component has storage stability of at least about seven days.

47. The polyurethane foam or elastomer according to Claim 33, wherein the isocyanate-reactive component has storage stability at temperatures of from about 10°C to about 40°C for at least about three days.

48. The polyurethane foam or elastomer according to Claim 33, wherein the isocyanate-reactive component has storage stability at temperatures of from about 15°C to about 35°C for at least about three days.

## Patentansprüche

1. Isocyanat-reaktive Komponente, umfassend:
mindestens ca. 10 Gew.%, bezogen auf das Gewicht der Isocyanat-reaktiven Komponente, Pflanzenöl-basiertes Polyol;
einen nicht-ionischen Emulgator, umfassend eines aus einem aliphatischen Alkoholethoxylat und einem aliphatischen Phenolethoxylat mit einem polymerisierten Ethylenoxid-Gehalt von mindestens ca. 25 Mol pro Äquivalent Alkohol oder Phenol und einem HLB-Wert größer als ca. 17;
ein oder mehrere Nicht-Pflanzenöl-basierte Polyole;
ein oder mehrere Silicon-Oberflächenaktivmittel und
gegebenenfalls Wasser oder weitere Blähmittel, Katalysatoren, Pigmente und Füllstoffe, worin die Isocyanat-reaktive Komponente bei Temperaturen von ca.
- 10°C bis ca. 60°C mindestens ca. 3 Tage lang lagerstabil ist.

2. Isocyanat-reaktive Komponente gemäß Anspruch 1, worin das Pflanzenöl ausgewählt ist aus Sonnenblumen-, Canola-, Leinsamen-, Baumwollsamen-, Tung-, Palm-, Mohnsamen-, Mais-, Rizinus-, Erdnuss- und aus Sojabohnenöl.

3. Isocyanat-reaktive Komponente gemäß Anspruch 1, worin das Pflanzenöl Sojabohnenöl ist.

4. Isocyanat-reaktive Komponente gemäß Anspruch 1, umfassend ca. 30 Gew.% bis ca. 40 Gew.%, bezogen auf das Gewicht der Isocyanat-reaktiven Komponente, Pflanzenöl-basiertes Polyol.

5. Isocyanat-reaktive Komponente gemäß Anspruch 1, umfassend mindestens ca. 40 Gew.%, bezogen auf das Gewicht der Isocyanat-reaktiven Komponente, Pflanzenöl-basiertes Polyol.

6. Isocyanat-reaktive Komponente gemäß Anspruch 1, worin das Nicht-Pflanzenöl-basierte Polyol ausgewählt ist aus Polyethern, Polyestern, Polyacetalen, Polycarbonaten, Polyesterethern, Polyestercarbonaten, Polythioethern, Polyamiden, Polyesteramiden, Polysiloxanen, Polybutadienen und aus Polyacetonen.

7. Isocyanat-reaktive Komponente gemäß Anspruch 1, worin das Nicht-Pflanzenöl-basierte Polyol ein Polyetherpolyol ist.

8. Isocyanat-reaktive Komponente gemäß Anspruch 1, worin das Nicht-Pflanzenöl-basierte Polyol ein Polyesterpolyol ist.

9. Isocyanat-reaktive Komponente gemäß Anspruch 1, worin der nicht-ionische Emulgator einen polymerisierten Ethylenoxid-Gehalt von mindestens ca. 30 Mol pro Äquivalent Alkohol oder Phenol und einen HLB-Wert größer als ca. 17,5 aufweist.

10. Isocyanat-reaktive Komponente gemäß Anspruch 1, worin der nicht-ionische Emulgator einen polymerisierten Ethylenoxid-Gehalt von mindestens ca. 35 Mol pro Äquivalent Alkohol oder Phenol und einen HLB-Wert größer als ca. 18 aufweist und das Äquivalentgewicht des Alkohols oder Phenols zwischen ca. 140 und ca. 250 beträgt.

11. Isocyanat-reaktive Komponente gemäß Anspruch 1, umfassend mindestens ca. 3 Gew.%, bezogen auf das Gewicht der Isocyanat-reaktiven Komponente, nicht-ionischen Emulgator.

12. Isocyanat-reaktive Komponente gemäß Anspruch 1, umfassend mindestens ca. 0,3 Gew.%, bezogen auf das Gewicht der Isocyanat-reaktiven Komponente, ein oder mehrere Silicon-Oberflächenaktivmittel.

13. Isocyanat-reaktive Komponente gemäß Anspruch 1 mit einer Lagerstabilität von mindestens ca. 7 Tagen.

14. Isocyanat-reaktive Komponente gemäß Anspruch 1 mit einer Lagerstabilität von mindestens ca. 30 Tagen.

15. Isocyanat-reaktive Komponente gemäß Anspruch 1, worin die Isocyanat-reaktive Komponente bei Temperaturen von ca. 10°C bis ca. 40°C mindestens ca. 3 Tage lagerstabil ist.

16. Isocyanat-reaktive Komponente gemäß Anspruch 1, worin die Isocyanat-reaktive Komponente bei Temperaturen von ca. 15°C bis ca. 35°C mindestens ca. 3 Tage lang lagerstabil ist.

17. Verfahren zur Herstellung einer Isocyanat-reaktiven Komponente, wobei man zusammenbringt:
mindestens ca. 10 Gew.%, bezogen auf das Gewicht der Isocyanat-reaktiven Komponente, Pflanzenöl-basiertes Polyol;
einen nicht-ionischen Emulgator, umfassend eines aus einem aliphatischen Alkoholethoxylat und einem aliphatischen Phenolethoxylat mit einem polymerisierten Ethylenoxid-Gehalt von mindestens ca. 25 Mol pro Äquivalent Alkohol oder Phenol und einem HLB-Wert größer als ca. 17;
ein oder mehrere Nicht-Pflanzenöl-basierte Polyole;
ein oder mehrere Silicon-Oberflächenaktivmittel und
gegebenenfalls Wasser oder weitere Blähmittel, Katalysatoren, Pigmente und Füllstoffe, worin die Isocyanat-reaktive Komponente bei Temperaturen von ca.
- 10°C bis ca. 60°C mindestens ca. 3 Tage lang lagerstabil ist.

18. Verfahren gemäß Anspruch 17, worin das Pflanzenöl ausgewählt ist aus Sonnenblumen-, Canola-, Leinsamen-, Baumwollsamen-, Tung-, Palm-, Mohnsamen-, Mais-, Rizinus-, Erdnuss- und aus Sojabohnenöl.

19. Verfahren gemäß Anspruch 17, worin das Pflanzenöl Sojabohnenöl ist.

20. Verfahren gemäß Anspruch 17, worin die Isocyanat-reaktive Komponente mindestens ca. 30 Gew.% bis ca. 40 Gew.%, bezogen auf das Gewicht der Isocyanat-reaktiven Komponente, Pflanzenöl-basiertes Polyol umfasst.

21. Verfahren gemäß Anspruch 17, worin die Isocyanat-reaktive Komponente mindestens ca. 40 Gew.%, bezogen auf das Gewicht der Isocyanat-reaktiven Komponente, Pflanzenöl-basiertes Polyol umfasst.

22. Verfahren gemäß Anspruch 17, worin das Nicht-Pflanzenöl-basierte Polyol ausgewählt ist aus Polyethern, Polyestern, Polyacetalen, Polycarbonaten, Polyesterethern, Polyestercarbonaten, Polythioethern, Polyamiden, Polyesteramiden, Polysiloxanen, Polybutadienen und aus Polyacetonen.

23. Verfahren gemäß Anspruch 17, worin das Nicht-Pflanzenöl-basierte Polyol ein Polyetherpolyol ist.

24. Verfahren gemäß Anspruch 17, worin das Nicht-Pflanzenöl-basierte Polyol ein Polyesterpolyol ist.

25. Verfahren gemäß Anspruch 17, worin der nicht-ionische Emulgator einen polymerisierten Ethylenoxid-Gehalt von mindestens ca. 30 Mol pro Äquivalent Alkohol oder Phenol und einen HLB-Wert größer als ca. 17,5 aufweist.

26. Verfahren gemäß Anspruch 17, worin der nicht-ionische Emulgator einen polymerisierten Ethylenoxid-Gehalt von mindestens ca. 35 Mol pro Äquivalent Alkohol oder Phenol und einen HLB-Wert größer als ca. 18 aufweist und das Äquivalentgewicht des Alkohols oder Phenols zwischen ca. 140 und ca. 250 beträgt.

27. Verfahren gemäß Anspruch 17, worin die Isocyanat-reaktive Komponente mindestens ca. 3 Gew.%, bezogen auf das Gewicht der Isocyanat-reaktiven Komponente, nicht-ionischen Emulgator umfasst.

28. Verfahren gemäß Anspruch 17, worin die Isocyanat-reaktive Komponente mindestens ca. 0,3 Gew.%, bezogen auf das Gewicht der Isocyanat-reaktiven Komponente, ein oder mehrere Silicon-Oberflächenaktivmittel umfasst.

29. Verfahren gemäß Anspruch 17, worin die Isocyanat-reaktive Komponente eine Lagerstabilität von mindestens ca. 7 Tagen aufweist.

30. Verfahren gemäß Anspruch 17, worin die Isocyanat-reaktive Komponente eine Lagerstabilität von mindestens ca. 30 Tagen aufweist.

31. Verfahren gemäß Anspruch 17, worin die Isocyanat-reaktive Komponente eine Lagerstabilität bei Temperaturen von ca. 10°C bis ca. 40°C für mindestens ca. 3 Tage aufweist.

32. Verfahren gemäß Anspruch 17, worin die Isocyanat-reaktive Komponente eine Lagerstabilität bei Temperaturen von ca. 15°C bis ca. 35°C für mindestens ca. 3 Tage aufweist.

33. Polyurethanschaum oder -elastomer, umfassend das Reaktionsprodukt aus:
mindestens einem Polyisocyanat; und
einer Isocyanat-reaktiven Komponente, umfassend
mindestens ca. 10 Gew.%, bezogen auf das Gewicht der Isocyanat-reaktiven Komponente, Pflanzenöl-basiertes Polyol;
einen nicht-ionischen Emulgator, umfassend eines aus einem aliphatischen Alkoholethoxylat und einem aliphatischen Phenolethoxylat mit einem polymerisierten Ethylenoxid-Gehalt von mindestens ca. 25 Mol pro Äquivalent Alkohol oder Phenol und einem HLB-Wert größer als ca. 17;
ein oder mehrere Nicht-Pflanzenöl-basierte Polyole;
ein oder mehrere Silicon-Oberflächenaktivmittel und
gegebenenfalls Wasser oder weitere Blähmittel, Katalysatoren, Pigmente und Füllstoffe, worin die Isocyanat-reaktive Komponente bei Temperaturen von ca. -10°C bis ca. 60°C mindestens ca. 3 Tage lang lagerstabil ist.

34. Polyurethanschaum oder -elastomer gemäß Anspruch 33, worin das mindestens eine Polyisocyanat ausgewählt ist aus Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, 1-Isocyanato-3,3,5-trimethyl-5-isocyanatomethylcylcohexan (Isophorondiisocyanat), 2,4- und 2,6-Hexahydrotoluoldiisocyanat, Dicyclohexylmethan-4,4'-diisocyanat (hydriertem MDI oder HMDI), 1,3- und 1,4-Phenylendiisocyanat, 2,4- und 2,6-Toluoldiisocyanat (TDI), Diphenylmethan-2,4'- und/oder -4,4'-diisocyanat (MDI), Napthalin-1,5-diisocyanat, Triphenylmethan-4,4',4"-triisocyanat, Polyphenylpolymethylenpolyisocyanaten (rohem MDI), Norbornandiisocyanaten, mund p-Isocyanatophenylsulfonylisocyanaten, perchlorierten Arylpolyisocyanaten, Carbodiimidmodifizierten Polyisocyanaten, Urethan-modifizierten Polyisocyanaten, Allophanat-modifizierten Polyisocyanaten, Isocyanurat-modifizierten Polyisocyanaten, Harnstoff-modifizierten Polyisocyanaten, Biuret-enthaltenden Polyisocyanaten, Isocyanat-terminierten Prepolymeren und aus Mischungen davon.

35. Polyurethanschaum oder -elastomer gemäß Anspruch 33, worin das Pflanzenöl ausgewählt ist aus Sonnenblumen-, Canola-, Leinsamen-, Baumwollsamen-, Tung-, Palm-, Mohnsamen-, Mais-, Rizinus-, Erdnuss- und aus Sojabohnenöl.

36. Polyurethanschaum oder -elastomer gemäß Anspruch 33, worin das Pflanzenöl Sojabohnenöl ist.

37. Polyurethanschaum oder -elastomer gemäß Anspruch 33, worin die Isocyanat-reaktive Komponente mindestens ca. 30 Gew.% bis ca. 40 Gew.%, bezogen auf das Gewicht der Isocyanat-reaktiven Komponente, Pflanzenöl-basiertes Polyol umfasst.

38. Polyurethanschaum oder -elastomer gemäß Anspruch 33, worin die Isocyanat-reaktive Komponente mindestens ca. 40 Gew.%, bezogen auf das Gewicht der Isocyanat-reaktiven Komponente, Pflanzenöl-basiertes Polyol umfasst.

39. Polyurethanschaum oder -elastomer gemäß Anspruch 33, worin das Nicht-Pflanzenölpolyol ausgewählt ist aus Polyethern, Polyestern, Polyacetalen, Polycarbonaten, Polyesterethern, Polyestercarbonaten, Polythioethern, Polyamiden, Polyesteramiden, Polysiloxanen, Polybutadienen und aus Polyacetonen.

40. Polyurethanschaum oder -elastomer gemäß Anspruch 33, worin das Nicht-Pflanzenöl-basierte Polyol ein Polyetherpolyol ist.

41. Polyurethanschaum oder -elastomer gemäß Anspruch 33, worin das Nicht-Pflanzenöl-basierte Polyol ein Polyesterpolyol ist.

42. Polyurethanschaum oder -elastomer gemäß Anspruch 33, worin der nicht-ionische Emulgator einen polymerisierten Ethylenoxid-Gehalt von mindestens ca. 30 Mol pro Äquivalent Alkohol oder Phenol und einen HLB-Wert größer als ca. 17,5 aufweist.

43. Polyurethanschaum oder -elastomer gemäß Anspruch 33, worin der nicht-ionische Emulgator einen polymerisierten Ethylenoxid-Gehalt von mindestens ca. 35 Mol pro Äquivalent Alkohol oder Phenol und einen HLB-Wert größer als ca. 18 aufweist und das Äquivalentgewicht des Alkohols oder Phenols zwischen ca. 140 und ca. 250 beträgt.

44. Polyurethanschaum oder -elastomer gemäß Anspruch 33, worin die Isocyanat-reaktive Komponente mindestens ca. 3 Gew.%, bezogen auf das Gewicht der Isocyanat-reaktiven Komponente, nicht-ionischen Emulgator umfasst.

45. Polyurethanschaum oder -elastomer gemäß Anspruch 33, worin die Isocyanat-reaktive Komponente mindestens ca. 0,3 Gew.%, bezogen auf das Gewicht der Isocyanat-reaktiven Komponente, ein oder mehrere Silicon-Oberflächenaktivmittel umfasst.

46. Polyurethanschaum oder -elastomer gemäß Anspruch 33, worin die Isocyanat-reaktive Komponente eine Lagerstabilität von mindestens ca. 7 Tagen aufweist.

47. Polyurethanschaum oder -elastomer gemäß Anspruch 33, worin die Isocyanat-reaktive Komponente eine Lagerstabilität bei Temperaturen von ca. 10°C bis ca. 40°C für mindestens ca. 3 Tage aufweist.

48. Polyurethanschaum oder -elastomer gemäß Anspruch 33, worin die Isocyanat-reaktive Komponente eine Lagerstabilität bei Temperaturen von ca. 15°C bis ca. 35°C für mindestens ca. 3 Tage aufweist.

## Revendications

1. Constituant isocyanate-réactif comprenant :
au moins environ 10 % en poids, rapporté au poids du constituant isocyanate-réactif, d'un polyol à base d'huile végétale ;
un émulsionnant non ionique comprenant un parmi un éthoxylate d'alcool aliphatique et un éthoxylate de phénol aliphatique présentant une teneur en oxyde d'éthylène polymérisé d'au moins environ 25 moles par équivalent d'alcool ou de phénol et une valeur HLB supérieure à environ 17 ;
un ou plusieurs polyols à base d'huile non végétale ;
un ou plusieurs tensioactifs de silicone, et
facultativement, de l'eau ou d'autres agents gonflants, catalyseurs, pigments et charges,
dans lequel le constituant isocyanate-réactif est stable au stockage à des températures d'environ -10°C à environ 60°C pendant au moins environ trois jours.

2. Constituant isocyanate-réactif selon la revendication 1, dans lequel l'huile végétale est choisie parmi l'huile de tournesol, l'huile de canola, l'huile de lin, l'huile de coton, l'huile d'abrasin, l'huile de palme, l'huile de pavot, l'huile de maïs, l'huile de ricin, l'huile d'arachide et l'huile de soja.

3. Constituant isocyanate-réactif selon la revendication 1, dans lequel l'huile végétale est l'huile de soja.

4. Constituant isocyanate-réactif selon la revendication 1 comprenant d'environ 30 % en poids à environ 40 % en poids, rapporté au poids du constituant isocyanate-réactif, du polyol à base d'huile végétale.

5. Constituant isocyanate-réactif selon la revendication 1 comprenant au moins environ 40 % en poids, rapporté au poids du constituant isocyanate-réactif, du polyol à base d'huile végétale.

6. Constituant isocyanate-réactif selon la revendication 1, dans lequel le polyol à base d'huile non végétale est choisi parmi des polyéthers, des polyesters, des polyacétals, des polycarbonates, des polyesteréthers, des polyestercarbonates, des polythioéthers, des polyamides, des polyesteramides, des polysiloxanes, des polybutadiènes et des polyacétones.

7. Constituant isocyanate-réactif selon la revendication 1, dans lequel le polyol à base d'huile non végétale est un polyétherpolyol.

8. Constituant isocyanate-réactif selon la revendication 1, dans lequel le polyol à base d'huile non végétale est un polyesterpolyol.

9. Constituant isocyanate-réactif selon la revendication 1, dans lequel l'émulsionnant non ionique présente une teneur en oxyde d'éthylène polymérisé d'au moins environ 30 moles par équivalent d'alcool ou de phénol et une valeur HLB supérieure à environ 17,5.

10. Constituant isocyanate-réactif selon la revendication 1, dans lequel l'émulsionnant non ionique présente une teneur en oxyde d'éthylène polymérisé d'au moins environ 35 moles par équivalent d'alcool ou de phénol et une valeur HLB supérieure à environ 18 et le poids équivalent de l'alcool ou du phénol est compris entre environ 140 et environ 250.

11. Constituant isocyanate-réactif selon la revendication 1 comprenant au moins environ 3 % en poids, rapporté au poids du constituant isocyanate-réactif, de l'émulsionnant non ionique.

12. Constituant isocyanate-réactif selon la revendication 1 comprenant au moins environ 0,3 % en poids, rapporté au poids du constituant isocyanate-réactif, d'un ou plusieurs tensioactifs de silicone.

13. Constituant isocyanate-réactif selon la revendication 1 présentant une stabilité au stockage d'au moins environ 7 jours.

14. Constituant isocyanate-réactif selon la revendication 1 présentant une stabilité au stockage d'au moins environ 30 jours.

15. Constituant isocyanate-réactif selon la revendication 1, dans lequel le constituant isocyanate-réactif est stable au stockage à des températures d'environ 10°C à environ 40°C pendant au moins environ trois jours.

16. Constituant isocyanate-réactif selon la revendication 1, dans lequel le constituant isocyanate-réactif est stable au stockage à des températures d'environ 15°C à environ 35°C pendant au moins environ trois jours.

17. Procédé de production d'un constituant isocyanate-réactif comprenant la combinaison :
d'au moins environ 10 % en poids, rapporté au poids du constituant isocyanate-réactif, d'un polyol à base d'huile végétale ;
d'un émulsionnant non ionique comprenant un parmi un éthoxylate d'alcool aliphatique et un éthoxylate de phénol aliphatique présentant une teneur en oxyde d'éthylène polymérisé d'au moins environ 25 moles par équivalent d'alcool ou de phénol et une valeur HLB supérieure à environ 17 ;
d'un ou plusieurs polyols à base d'huile non végétale ;
d'un ou plusieurs tensioactifs de silicone, et
facultativement, d'eau ou d'autres agents gonflants, catalyseurs, pigments et charges,
dans lequel le constituant isocyanate-réactif est stable au stockage à des températures d'environ -10°C à environ 60°C pendant au moins environ trois jours.

18. Procédé selon la revendication 17, dans lequel l'huile végétale est choisie parmi l'huile de tournesol, l'huile de canola, l'huile de lin, l'huile de coton, l'huile d'abrasin, l'huile de palme, l'huile de pavot, l'huile de maïs, l'huile de ricin, l'huile d'arachide et l'huile de soja.

19. Procédé selon la revendication 17, dans lequel l'huile végétale est l'huile de soja.

20. Procédé selon la revendication 17, dans lequel le constituant isocyanate-réactif comprend au moins d'environ 30 % en poids à environ 40 % en poids, rapporté au poids du constituant isocyanate-réactif, du polyol à base d'huile végétale.

21. Procédé selon la revendication 17, dans lequel le constituant isocyanate-réactif comprend au moins environ 40 % en poids, rapporté au poids du constituant isocyanate-réactif, du polyol à base d'huile végétale.

22. Procédé selon la revendication 17, dans lequel le polyol à base d'huile non végétale est choisi parmi des polyéthers, des polyesters, des polyacétals, des polycarbonates, des polyesteréthers, des polyestercarbonates, des polythioéthers, des polyamides, des polyesteramides, des polysiloxanes, des polybutadiènes et des polyacétones.

23. Procédé selon la revendication 17, dans lequel le polyol à base d'huile non végétale est un polyétherpolyol.

24. Procédé selon la revendication 17, dans lequel le polyol à base d'huile non végétale est un polyesterpolyol.

25. Procédé selon la revendication 17, dans lequel l'émulsionnant non ionique présente une teneur en oxyde d'éthylène polymérisé d'au moins environ 30 moles par équivalent d'alcool ou de phénol et une valeur HLB supérieure à environ 17,5.

26. Procédé selon la revendication 17, dans lequel l'émulsionnant non ionique présente une teneur en oxyde d'éthylène polymérisé d'au moins environ 35 moles par équivalent d'alcool ou de phénol et une valeur HLB supérieure à environ 18 et le poids équivalent de l'alcool ou du phénol est d'environ 140 à environ 250.

27. Procédé selon la revendication 17, dans lequel le constituant isocyanate-réactif comprend au moins environ 3 % en poids, rapporté au poids du constituant isocyanate-réactif, de l'émulsionnant non ionique,

28. Procédé selon la revendication 17, dans lequel le constituant isocyanate-réactif comprend au moins environ 0,3 % en poids, rapporté au poids du constituant isocyanate-réactif, du un ou plusieurs tensioactifs de silicone.

29. Procédé selon la revendication 17, dans lequel le constituant isocyanate-réactif présente une stabilité au stockage d'au moins environ 7 jours.

30. Procédé selon la revendication 17, dans lequel le constituant isocyanate-réactif présente une stabilité au stockage d'au moins environ 30 jours.

31. Procédé selon la revendication 17, dans lequel le constituant isocyanate-réactif présente une stabilité au stockage à des températures d'environ 10°C à environ 40°C pendant au moins environ trois jours.

32. Procédé selon la revendication 17, dans lequel le constituant isocyanate-réactif présente une stabilité au stockage à des températures d'environ 15°C à environ 35°C pendant au moins environ trois jours.

33. Mousse ou élastomère de polyuréthane comprenant le produit de réaction :
d'au moins un polyisocyanate ; et
d'un constituant isocyanate-réactif comprenant
au moins environ 10 % en poids, rapporté au poids du constituant isocyanate-réactif, d'un polyol à base d'huile végétale ;
un émulsionnant non ionique comprenant un parmi un éthoxylate d'alcool aliphatique et un éthoxylate de phénol aliphatique présentant une teneur en oxyde d'éthylène polymérisé d'au moins environ 25 moles par équivalent d'alcool ou de phénol et une valeur HLB supérieure à environ 17 ;
un ou plusieurs polyols à base d'huile non végétale ;
un ou plusieurs tensioactifs de silicone, et
facultativement, de l'eau ou d'autres agents gonflants, catalyseurs, pigments et charges,
dans lequel le constituant isocyanate-réactif est stable au stockage à des températures d'environ -10°C à environ 60°C pendant au moins environ trois jours.

34. Mousse ou élastomère de polyuréthane selon la revendication 33, dans lequel le au moins un polyisocyanate est choisi parmi le diisocyanate d'éthylène, le diisocyanate de 1,4-tétraméthylène, le diisocyanate de 1,6-hexaméthylène, le diisocyanate de 1,12-dodécane, le 1,3-diisocyanate de cyclobutane, le 1,3- et 1,4-diisocyanate de cyclohexane, le 1-isocyanato-3,3,5-triméthyl-5-isocyanatométhylcyclohexane (diisocyanate d'isophorone), le diisocyanate de 2,4- et 2,6-hexahydro-toluène, le 4,4'-diisocyanate de dicyclohexylméthane (MDI hydrogéné ou HMDI), le diisocyanate de 1,3- et 1,4-phénylène, le diisocyanate de 2,4- et 2,6-toluène (TDI), le 2,4'- et/ou 4,4'-diisocyanate de diphénylméthane (MDI), le 1,5-diisocyanate de naphtylène, le 4,4',4"-triisocyanate de triphénylméthane, des polyphénylpolyméthylène-polyisocyanates (MDI brut), des diisocyanates de norbomane, des sulfonylisocyanates de m- et p-isocyanatophényle, des polyisocyanates d'aryle perchlorés, des polyisocyanates carbodiimide-modifiés, des polyisocyanates uréthane-modifiés, des polyisocyanates allophanate-modifiés, des polyisocyanates isocyanurate-modifiés, des polyisocyanates urée-modifiés, des polyisocyanates contenant des biurets, des prépolymères isocyanate-terminés et des mélanges de ceux-ci.

35. Mousse ou élastomère de polyuréthane selon la revendication 33, dans lequel l'huile végétale est choisie parmi l'huile de tournesol, l'huile de canola, l'huile de lin, l'huile de coton, l'huile d'abrasin, l'huile de palme, l'huile de pavot, l'huile de maïs, l'huile de ricin, l'huile d'arachide et l'huile de soja.

36. Mousse ou élastomère de polyuréthane selon la revendication 33, dans lequel l'huile végétale est l'huile de soja.

37. Mousse ou élastomère de polyuréthane selon la revendication 33, dans lequel le constituant isocyanate-réactif comprend au moins d'environ 30 % en poids à environ 40 % en poids, rapporté au poids du constituant isocyanate-réactif, du polyol à base d'huile végétale.

38. Mousse ou élastomère de polyuréthane selon la revendication 33, dans lequel le constituant isocyanate-réactif comprend au moins environ 40 % en poids, rapporté au poids du constituant isocyanate-réactif, du polyol à base d'huile végétale.

39. Mousse ou élastomère de polyuréthane selon la revendication 33, dans lequel le polyol à base d'huile végétale est choisi parmi des polyéthers, des polyesters, des polyacétals, des polycarbonates, des polyesteréthers, des polyestercarbonates, des polythioéthers, des polyamides, des polyesteramides, des polysiloxanes, des polybutadiènes et des polyacétones.

40. Mousse ou élastomère de polyuréthane selon la revendication 33, dans lequel le polyol à base d'huile non végétale est un polyétherpolyol.

41. Mousse ou élastomère de polyuréthane selon la revendication 33, dans lequel le polyol à base d'huile non végétale est un polyesterpolyol.

42. Mousse ou élastomère de polyuréthane selon la revendication 33, dans lequel l'émulsionnant non ionique présente une teneur en oxyde d'éthylène polymérisé d'au moins environ 30 moles par équivalent d'alcool ou de phénol et une valeur HLB supérieure à environ 17,5.

43. Mousse ou élastomère de polyuréthane selon la revendication 33, dans lequel l'émulsionnant non ionique présente une teneur en oxyde d'éthylène polymérisé d'au moins environ 35 moles par équivalent d'alcool ou de phénol et une valeur HLB supérieure à environ 18 et le poids équivalent de l'alcool ou du phénol est d'environ 140 à environ 250.

44. Mousse ou élastomère de polyuréthane selon la revendication 33, dans lequel le constituant isocyanate-réactif comprend au moins environ 3 % en poids, rapporté au poids du constituant isocyanate-réactif, de l'émulsionnant non ionique.

45. Mousse ou élastomère de polyuréthane selon la revendication 33, dans lequel le constituant isocyanate-réactif comprend au moins environ 0,3 % en poids, rapporté au poids du constituant isocyanate-réactif, du un ou plusieurs tensioactifs de silicone.

46. Mousse ou élastomère de polyuréthane selon la revendication 33, dans lequel le constituant isocyanate-réactif présente une stabilité au stockage d'au moins environ sept jours.

47. Mousse ou élastomère de polyuréthane selon la revendication 33, dans lequel le constituant isocyanate-réactif présente une stabilité au stockage à des températures d'environ 10°C à environ 40°C pendant au moins environ trois jours.

48. Mousse ou élastomère de polyuréthane selon la revendication 33, dans lequel le constituant isocyanate-réactif présente une stabilité au stockage à des températures d'environ 15°C à environ 35°C pendant au moins environ trois jours.
